# EUROPEAN PATENT APPLICATION

(11) **EP 3 539 824 A1**
(43) Date of publication of application: **18.09.2019**
(21) Application number: 18161896.8
(22) Date of filing: 15.03.2018
(51) Int. Cl.: B60Q 1/26

(54) **VEHICLE BODY ELEMENT COMPRISING A LIGHT GUIDE**

(71) Applicant: NIO Nextev Limited, Hong Kong (HK)
(72) Inventor: Seiller, Julien, 81479 München (DE)
(74) Representative: Keilitz, Wolfgang

(57) **Abstract**

The present invention relates to a vehicle body element (1) comprising a light guide (2), wherein the vehicle body element (1) further comprises a recess (8) for mounting the light guide (2), and wherein an outer face of the light guide (2) is coated with a coating material (5). Such a vehicle body element (1) can be manufactured in a very simple and cost effective manner. Further, the present invention relates to a method for producing a vehicle body element (1) comprising the steps of: producing a part (3) of the vehicle body element (1) from a plastic material, the part (3) having a recess (8) for mounting a light guide (2), mounting the light guide (2) in the recess (8) of the part (3), and coating the outer face of the light guide (2) with a coating material (5).

## Description

The present invention relates to a vehicle body element comprising a light guide and a method for producing a vehicle body element including a light guide.

### TECHNICAL BACKGROUND

In the field of vehicle lighting it is well known to integrate a lighting system in a vehicle body element such as a tailgate, a spoiler, a side mirror or a bumper of the vehicle. The lighting system is typically arranged in an opening provided in the vehicle body element or between two adjacent parts of the vehicle body element. Lighting systems which are well-known in the prior art are usually encased in a housing which primarily serves to shield the lighting systems from the surroundings. In many cases, the housing is provided with optical properties which serve to bundle or disperse the light in a desired manner.

Prior art document WO 2016/102468 A1 describes a vehicle body element comprising a light guide which is arranged in a housing. The housing comprises multiple parts, one of which is made from a translucent material, so that the light emitted by the light guide may pass through the translucent material to the outside. A drawback of this light system may be seen in that a separate housing, to further be mounted to the vehicle body element for the light guide is required. This is relatively complex and costly.

A problem of the present invention thus may be seen in providing a vehicle body element comprising a light guide with a much simpler construction and which is much easier and cheaper to manufacture.

### SUMMARY

In order to solve the aforementioned problem, the present invention suggests a vehicle body element comprising a recess in which a light guide is mounted. According to the invention, there is no housing element, lid or any other type of cover provided for covering the recess from the outside. Instead, the light guide is simply coated with a coating material which protects the light guide from the environment. If the coating material is applied sufficiently thick so that the recess is closed by the coating material, the light guide may be hermetically sealed from the environment. Since the vehicle body element according to the invention does not require any housing or cover for the light guide, it can be manufactured much simpler and cost effective than well-known vehicle body elements having an integrated light system with a housing.

In the context of this invention, a "coating material" can be any material which may be applied in a liquid state and which then cures under ambient conditions. Examples of appropriate materials comprise: any kind of varnish, a transparent coating, a color coating, a protective coating, paint or any combinations thereof.

A "vehicle body element" as referred to in this application may comprise one or several vehicle parts, for instance one or several parts of: a spoiler, a tailgate, a side mirror, a side door, a bumper, any kind of exterior body panel or a lighting unit. A combination of two or more vehicle parts, such as a spoiler and a rear window, is also referred to as a "vehicle body element" in this application. In a combination as mentioned before, the recess may be a space between two adjacent vehicle parts for instance.

A "recess" according to the invention may refer to: any kind of opening such as a groove, a slot, a gap between two vehicle parts or any other type of mounting space in which the light guide may be mounted. For example, the recess may be an opening provided in a vehicle part, e.g. in a spoiler. In another example, the recess may be a space between two vehicle parts, e.g. between a rear spoiler and a rear window. Also, the light guide may be fixed by means of a window sealing or in a space between two seals.

According to a preferred embodiment of the invention, the recess provided in the vehicle body element is defined by the shape of the vehicle body element and forms an integral part thereof. In this case, the recess is confined by a wall of the vehicle body element to an inside and opens to an outside.

According to an aspect of the invention, the coating material is directly applied to the light guide. One or more layers of the same or different coating materials may be applied. If the coating material is applied sufficiently thick, the light guide may be hermetically sealed from the environment.

In an embodiment of the present invention, the light guide is made of an elastic material, in particular of a plastic material.

The recess for mounting the light guide can be dimensioned so that the light guide may be force-fit in the mounting space. This embodiment allows a very simple manufacturing of the light guide since the light guide is automatically fixed in the mounting space.

Alternatively or additionally, the light guide may be fixed by an adhesive.

According to another embodiment, a clamping mechanism or any other type of fastening element may be provided in the recess which allows the light guide to be fixed therein.

According to another aspect of the present invention, a vehicle body element having an integrated light guide is suggested, wherein the vehicle body element comprises at least one vehicle part which is manufactured in a molding process from a plastic material. In this case, the light guide is embedded in the vehicle part by overmolding the light guide with plastic material. Thereby, the optical properties of a part of the plastic material which is located at an outer face of the light guide are selected so that the light emitted by the light guide may pass through the plastic material to the outside. Thus, the light will be visible from the outside when the light system is turned on.

The optical properties of the plastic material, and, hence, that of the vehicle lighting system depend on various factors, including: the thickness of the plastic material which is located at the outer face of the light guide, the color of the plastic material, its transparency and the type of the material. A skilled person will select the various parameters as required.

The plastic material may also provide features of an optical lens, such as concave or convex structures, steps, ribs or any other features which can bundle or diffuse light.

A vehicle part as referred to in this application can be made from a single plastic component or from at least two different plastic components. In case of a vehicle part which is made from different plastic components, a part of the plastic material which is located at an outer face of the light guide may be made of a translucent material, whereas another part of the plastic material may be made of an opaque material.

In a special version of the vehicle body element, the plastic material, which is located adjacent to the outer face of the light guide may have a light transmittance, where the plastic material is selected so that the quantity of natural light passing through the plastic material, reflecting on the light guide and passing back through the plastic material to the outside is sufficiently low to blank the light guide when the light system is switched off.

According to a preferred embodiment of the present invention, the light guide is provided as a light fiber. In this case, the recess is preferably formed as a slot-like opening or a groove, respectively.

A light source, the light of which is coupled into the light guide may have one or more LEDs or any other type of light sources.

In order to couple the light source and the light guide, the vehicle body element may comprise a fastening element for fastening the light source. This fastening element may comprise any well-known type of fastener such as a snap-in locking device, a connecting piece with or without a thread, a latch connector or any other well-known quick-lock mechanism.

In a special version of the present invention, the fastening element is formed as a pipe socket having an interior space in which the light guide is arranged. The pipe socket may be provided with an external thread.

According to a preferred embodiment of the present invention, the fastening element is formed as an integral part of the vehicle body element.

The present invention further relates to a method for producing a vehicle body element comprising the steps of: producing a part of the vehicle body element from a plastic material having a recess for mounting a light guide, mounting the optical light guide in the recess, and coating the outer face of the light guide with a coating material.

Further, the present invention relates to a method for producing a vehicle body element comprising the steps of: placing a light guide in a mold; overmolding the light guide with a plastic material so that it is embedded in the plastic material, wherein the optical properties of the plastic material which is located at an outer face of the light guide are selected so that the light emitted by the light guide may pass through the plastic material to the outside.

In a preferred embodiment of the invention mentioned before, in the step of overmolding the light guide, a fastening element for fastening a light source is molded. Thereby, the vehicle part and the fastening element may be manufactured in a single step and in one piece.

The light guide may have a round, oval or any kind of angular profile. In particular, a non-round profile may help in a proper positioning of the light guide so that an output side of light guide will automatically be oriented to the outside. Correspondingly, the shape of the recess may be round, oval or angular in cross section.

### BRIEF DESCRIPTION OF THE DRAWINGS

Particular embodiments of the present disclosure are described herein below with reference to the accompanying drawings, of which:
Fig. 1 is a sectional view of a vehicle body element with an integrated light guide according to a first embodiment of the present invention;
Fig. 2 is a sectional view of a vehicle body element with an integrated light guide according to a second embodiment of the present invention;
Fig. 3 is a sectional view of a vehicle body element with an integrated light guide according to a third embodiment of the present invention;
Fig. 4 is a sectional view of a vehicle body element with an integrated light guide according to a fourth embodiment of the present invention;
Fig. 5 is a sectional view of a vehicle body element with an integrated light guide according to a fifth embodiment of the present invention;
Fig. 6 is a sectional view of a vehicle body element with an integrated light guide according to a sixth embodiment of the present invention;
Fig. 7 is a schematic illustration showing a first state in a process of overmolding a light guide;
Fig. 8 is a schematic illustration showing a second state in a process of overmolding a light guide;
Fig. 9 is a schematic illustration showing a ready molded vehicle body element and a detailed view of a pipe socket;
Fig. 10 is a schematic illustration of the vehicle body element of Fig. 9, wherein a light source is connected to the pipe socket in a first manner; and
Fig. 11 is a schematic illustration of the ready molded part of Fig. 9 wherein a light source is connected to the pipe socket in a second manner.

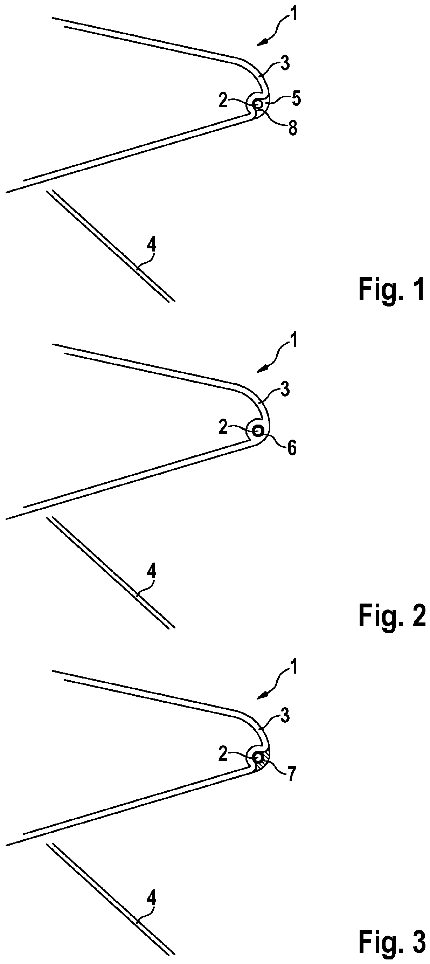

With reference to Fig. 1, a vehicle body element 1 is shown which, in this example embodiment, comprises a spoiler 3 with an integrated light guide 2. The spoiler 3 is made of a plastic material which is shaped to provide a recess 8 for holding the light guide 2. The recess 8 is open to an outside (in Fig. 1 to the right) and closed to an inside (in Fig. 1 to the left). A rear window is designated by reference number 4.

As can be seen in Fig. 1, there is no housing, enclosure or any type of cover provided for covering the light guide 2 to the outside. Instead, the light guide 2 is directly mounted in the recess 8 (without any housing) and, after having been installed, it is simply coated with a coating material 5 which protects the light guide 2 from the environment.

The coating material 5 may be any material which may be applied in a liquid state and which then cures under ambient conditions. In principle, any well-known coating material, such as a varnish, a color coating, a transparent coating, paint, a protective coating, etc. is applicable. The coating material 5 is directly applied to the outer face of the light guide 2.

According to an aspect of the present invention, the light guide 2 may be made of an elastic material such as an elastic plastic material. In this case, the shape of the recess 8, in particular its width is adapted to the profile of the light guide 2 and is dimensioned so that the light guide 2 may be force-fit in the recess 8.

Alternatively or additionally, the vehicle body element may be made of an elastic material which slightly opens up further when the light guide is inserted into the recess.

Fig. 2 shows a vehicle body element 1 which, in this example embodiment, is provided as a spoiler 3, which has been manufactured in a molding process from a plastic material. As can be seen in this illustration, the light guide 2 has been overmolded by the plastic material 6 so that it is completely embedded in the plastic material 6. In the embodiment as shown in Fig. 2, the spoiler 3 is made of a single plastic component. Again, there is no housing or enclosure required which makes this version relatively simple and cost-effective.

In order to be visible from the outside when the light system turned on, the optical properties of at least a part of the plastic material 6 which is located adjacent to the outer face of the light guide 2 (which is on the right hand in Fig. 2) are selected so that the light emitted by the light guide 2 may pass through the plastic material 6 to the outside.

The optical properties of the plastic material 6 are principally determined by its type, thickness, color and transparency and are further affected by the finishing or coating. A skilled person will select the individual parameters as required depending on the optical appearance of the light system which is to be achieved.

Fig. 3 shows a similar vehicle body element 1 as in Fig. 2 which has been produced from a plastic material 6 in an injection molding process. In contrast to Fig. 2, the spoiler 3 has been produced in a 2K molding process from two different plastic components. Thereby, the entire body of the spoiler 3 except from the portion 7 which is located next to the outer face of the light guide 2 is made from a first component. The other portion is made from a second plastic component. In a final step, the spoiler 3 or at least a part of which may be coated with a coating material.

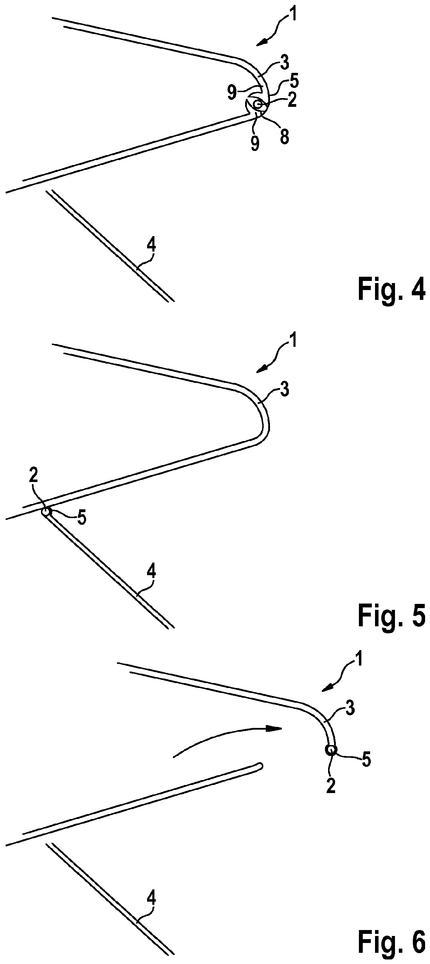

Fig. 4 shows a sectional side view of a rear spoiler 3 consisting of two parts. In this embodiment, the light guide 2 is located in a recess 8 which is provided between two adjacent portions of the spoiler parts. As can be seen, the light guide 2 is clamped between the two adjacent end portions 9 of the spoiler 3.

At least the outside of the light guide 2 may be coated with a coating material 5. Again, the recess 8 is open to the outside which means that there is no housing, enclosure, cover or any other hardware part which covers the recess 8 to the outside.

Fig. 5 shows an embodiment of a vehicle body element 1 which, in this example embodiment, comprises two vehicle parts, namely a spoiler 3 and a rear window 4. In this case, the recess 8 is provided as a gap between a two vehicle parts 3, 4. The light guide 2 may be force-fit or fixed in the mounting space by means of an adhesive. An outer face of the light guide 2 is coated with a coating material 5.

Fig. 6 illustrates an embodiment of the spoiler 3 having a fixed part and a moveable part which may be displaced in a longitudinal direction of the vehicle. The light guide 2 is mounted to an end portion of the fixed part of the spoiler 3 and is coated with a coating material 5.

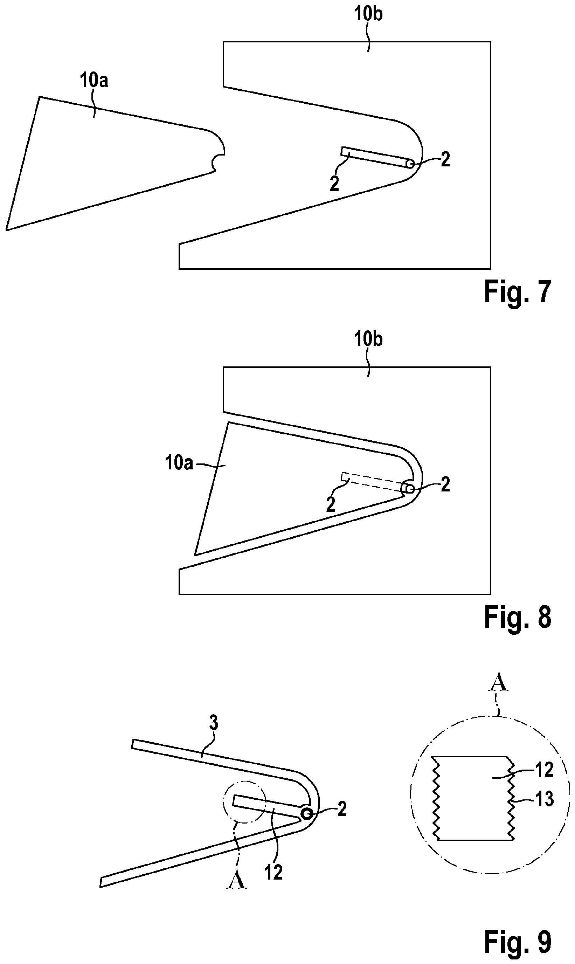

Figs. 7 to 9 show different states in the process of producing a spoiler 3 by injection molding. In a first state as shown in Fig. 7, the light guide 2 is placed in a mold comprising two parts 10a, 10b. Thereafter, the mold 10 is closed as shown in Fig. 8 and a shot of plastic material is injected into the mold 10. Fig. 9 shows the finished product, namely a spoiler 3 having a connecting piece 12 for fastening a light source 11, the light of which is coupled into the light guide 2.

In the injection molding process as illustrated in Figs. 7-9, the connecting piece 12 is formed as an integral part of the spoiler 3. To this end, the part 10a of the mold 10a, 10b is provided with an internal cavity (not shown) into which the end portion of the light guide 2 is inserted. Thereby, the whole spoiler 3 including the connecting piece 12 may be produced in one step.

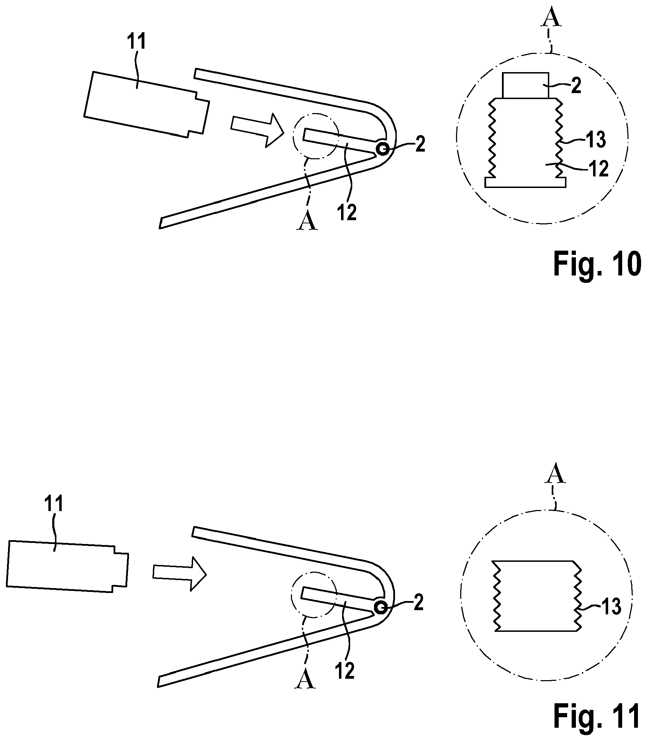

The fastening element or connecting piece 12, respectively, is provided as a pipe socket having an interior space in which the light guide 2 is arranged. The outside of the connecting piece is provided with an external thread 13 which allows the light source 11 to be screwed on the connecting piece 12. as shown in Fig. 10.

If required, the connecting piece 12 together with the light guide 2 residing inside the connecting piece 12 may be truncated at a desired length so that the end of the connecting piece 12 and the end of the light guide 2 flush with each other. Thereby, a perfect coupling of the light into the light guide 2 is ensured. Finally, the light source 11 is attached to the connecting piece 12 by screwing. Naturally, any other well-known type of connector for the light source may be provided.

### List of reference signs

- 1: vehicle body element
- 2: light guide
- 3: spoiler
- 4: rear window
- 5: coating material
- 6: plastic material
- 7: portion of plastic material located on the outside
- 8: recess
- 9: end portions
- 10a,b: mold
- 11: light source
- 12: connecting piece
- 13: external thread

## Claims

1. Vehicle body element (1) comprising a light guide (2), wherein the vehicle body element (1) further comprises a recess (8) for mounting the light guide (2), and wherein an outer face of the light guide (2) is coated with a coating material (5).

2. Vehicle body element (1) according to claim 1, wherein the coating material (5) is directly applied to the light guide (2).

3. Vehicle body element (1) according to claim 1 or 2, wherein the light guide (2) is made of an elastic material and the recess (8) is dimensioned so that the light guide (2) may be force-fit in the recess (8).

4. Vehicle body element (1) according to one of the preceding claims, wherein a clamping mechanism is provided which allows the light guide (2) to be fixed in the recess (8).

5. Vehicle body element (1) according to one of the preceding claims, wherein the recess (8) and the light guide (2) are located in an area between two parts of the vehicle body element (1).

6. Vehicle body element (1) comprising at least one vehicle part (3) which is manufactured in a molding process from a plastic material, wherein the vehicle body element (1) comprises a light guide (2) which is overmolded by the plastic material, wherein the optical properties of a part of the plastic material (6, 7) which is located adjacent to an outer face of the light guide (2) are selected so that the light emitted by the light guide (2) may pass through the plastic material to the outside.

7. Vehicle body element (1) according to claim 6, wherein the vehicle part (3) is made from a single plastic component or from at least two different plastic components.

8. Vehicle body element (1) according to claim 6 or 7, wherein the plastic material, which is located adjacent to the outer face of the light guide has a light transmittance, where the plastic material is selected so that the quantity of natural light passing through the plastic material, reflecting on the light guide and passing back through the plastic material to the outside is sufficiently low to blank the light guide when the light system is switched off.

9. Vehicle body element (1) according to one of the preceding claims, wherein the light guide (2) is a light fiber.

10. Vehicle body element (1) according to one of the preceding claims, wherein it further comprises a fastening element (12) for fastening a light source (11), the light of which is coupled into the light guide (2).

11. Vehicle body element (1) according to claim 10, wherein the fastening element (12) is formed as an integral part of the vehicle body element (1).

12. Vehicle body element (1) according to claim 10 or 11, wherein the fastening element (12) is formed as a pipe socket having an interior space in which the light guide (2) is arranged.

13. A method for producing a vehicle body element (1) according to one of the claims 1 to 5, comprising the steps of:
- producing a part (3) of the vehicle body element (1) from a plastic material, the part (3) having a recess (8) for mounting a light guide (2),
- mounting the light guide (2) in the recess (8) of the part (3), and
- coating the outer face of the light guide (2) with a coating material (5).

14. A method for producing a vehicle body element (1) according to one of the claims 6 to 12, comprising the steps of:
- placing a light guide (2) in a mold;
- overmolding the light guide (2) with a plastic material so that it is embedded in the plastic material, wherein the optical properties of the plastic material which is located at an outer face of the light guide (2) are selected so that the light emitted by the light guide (2) may pass through the plastic material to the outside.

15. A method for producing a vehicle body element (1) according to claim 14, wherein in the step of overmolding the light guide (2) also a fastening element (12) for fastening a light source (11) is molded.
